# EUROPEAN PATENT SPECIFICATION

(11) **EP 1 232 834 B1**
(45) Date of publication and mention of the grant of the patent: **17.11.2004**
(21) Application number: 02003404.7
(22) Date of filing: 14.02.2002
(51) Int. Cl.: B23Q 17/20, B23Q 17/24, G05B 19/19

(54) **Diamond machine, provided with an electronic detecting and controlling system to detect and control the shape of a piece to be incised**
Werkzeugmaschine mit Diamantwerkzeug, mit elektrischem System zur Erfassung und Steuerung der Raumform eines einzuschneidenden Werkstücks
Machine-outil avec outil en diamant pourvue d'un système électronique pour la détection et le contrôle de la forme d'une pièce destinée à être entaillée

(30) Priority: 19.02.2001 IT VR010020
(43) Date of publication of application: 21.08.2002
(73) Proprietor: Faimond S.r.l., 36057 Arcugnano, Vicenza (IT)
(72) Inventor: Dal Lago, Gianluigi, 36057 Arcugnano, Vicenza (IT)
(74) Representative: Savi, Alberto

(56) References cited:
- DE-A- 3 829 488
- DE-A- 19 832 656
- DE-U- 29 709 877
- GB-A- 2 074 320
- US-A- 5 255 199
- US-A- 5 522 683
- US-A- 5 529 441

## Description

The present industrial invention proposes a diamond machine or the like. Its inventive peculiarity is the presence of an electronic detecting system for detecting the shape of a piece to be diamond-incised, in particular for detecting the shape of each link or ring or other element of a chain, chainlet or similar jewelry object.

More precisely, the diamond machine according to the present invention is equipped with a detecting and controlling device that permits to perform a machining of high precision, i.e. only in determined sectors or in the wished sectors of each chain link.

As a matter of fact, this device calculates the error between the nominal position and the real position of each single piece, for instance in case of differences among the chain links or in case of different mounting distances.

The present detecting system utilizes a detector of the telecamera type or the like that permits to visualize, in a suitable monitor, the shape of each link and its position on a vice in comparison with the incising tools.

The machine and its detecting system according to the present invention can be included in a specific field, namely, the activity of planning and constructing precision machines for jewelry, in particular machines of high technology, utilized in the diamond-incision field for the diamond-incision of surfaces of chains, chainlets in precious metals or non-precious metals or articles of costume jewelry.

It is known that in the field of diamond machines, several models of diamond machines are produced and marketed for the diamond-incision of chains, chainlets and jewels in general. The most demanded diamond machines are the automatic machines for multiface chain tracery and diamond-incisions to obtain chains showing a rounded or shaped outline, thread chains, pipe chains and bar chains. In addition, there is a great demand for lapping diamond machines to obtain flat or concave or convex or angled surfaces.

By utilizing the above machines it is possible to accomplish an operation schedule in a completely automatic way, both continuous and alternate. These machines are provided with a tool-supporting head, which position can be adjusted to perform a different machining since the axes of the tools can be arranged horizontally or vertically.

In some cases, the working can be visualized through a videocamera and the movement of the so-visualized axes is controlled by a numerical control unit.

The utilization of the aforesaid machines is very diffuse and is unreplaceable in this field.

For example it is known that the patent document DE-U-29709877, forming the basis for the preamble of claim 1, discloses a device wherein an optical apparatus is used to position a tool carrier and to align it by means of an axial hole through which a video camera is focused. The objective of the video camera is linked to a device such as a monitor in order to display the image of the tool carrier and said device is intended to be used with a positioning grid or similar.

However this machinery is simply an optical apparatus which can not digitalize the image without recognizing different zones in the working piece.

Besides it is known that the patent document DE-A-3829488, even it is related to different working process, discloses a device for applying a holding part on spectacle glasses which utilizes a centring unit consisting of a video camera connected to a viewing screen of a computer which is linked to a cross-slide where the raw glass is positioned. In this case the computer simply compares the image detected by the video camera with a sample image, by overlapping the contour of the raw glass with the contour of the sample glass. In this way no detection of different zones on the working piece is made and it is impossible to control the error limits for which the correction process of the cross-slide position have to intervene.

However, there are other problems and a necessities that are still to be solved and that the technicians of this field have not been able to solve up to now since the instruments utilized are inadequate and unprecise. It is the necessity of seeing the actual shape and position of the piece to be processed while the piece is under the tools in order to correct the possible errors of this position in a precise and totally automatic manner, the working speed remaining sufficiently high.

In fact, position errors can occur during the feeding of the single pieces forming the chain while the chain is kept by the vice or other supports.

Till now, the adjustment of the position of the single links forming the chain to be diamond-incised in comparison with the incising diamond tools has been effected by using very unprecise, complex, expensive devices. In addition, these devices move very slowly.

For instance, devices of the jack type have been utilized in which a single chain link is taken at a time.Then, the single chain links are fed progressively and in succession under the tools.

In other cases, detecting jigs or optical fibre devices or similar devices have been utilized to detect the links or rings or pieces forming the chain to be processed but also in these cases the aforesaid drawbacks occurred.

The aim of the present invention is to conceive and carry out an incising diamond machine equipped with a vice in which a proper movement of the vice causes an exact positioning of the single chain links since the position of each chain link is detected and corrected, if necessary, in comparison with the barycentre of the tools.

The main object of the invention is to conceive and carry out a detecting system that permits an excellent precision and works very rapidly. In practice, an instrument for controlling the diamond-incision permits to operate with a very rapid feeding speed and with results that have never been reached so far.

All the above mentioned aims and advantages are reached according to the present invention through an incising diamond machine equipped with a detecting electronic system to detect the shape of the pieces to be diamond-incised, characterized by the fact that the said detecting system is based on the presence of at least one detecting apparatus such as a telecamera or the like, positioned near the vertical of the piece to be machined, which piece is fed to a vice or the like; images of the piece are transmitted to a monitor that includes means to set up and process parameters, and by the fact that the set up and processed working parameters are then transformed in signals to move the vice that holds the piece so that the vice is able to instantaneously and micrometrically displace each ring or link or piece to be worked and to exactly adjust the barycentre of the piece under the incising diamond tools of the head.

While positioning each single piece, the correction of the error is done on comparing the position of the light and dark zones (full and empty zones) of each link or ring as well as the position of the same zones detected on a sample image; the sample image represents the working barycentre for the tools.

Further characteristics and details of the present invention will be better understood from the following description, given as a nonlimiting example, on the base of the accompanying drawings, wherein:

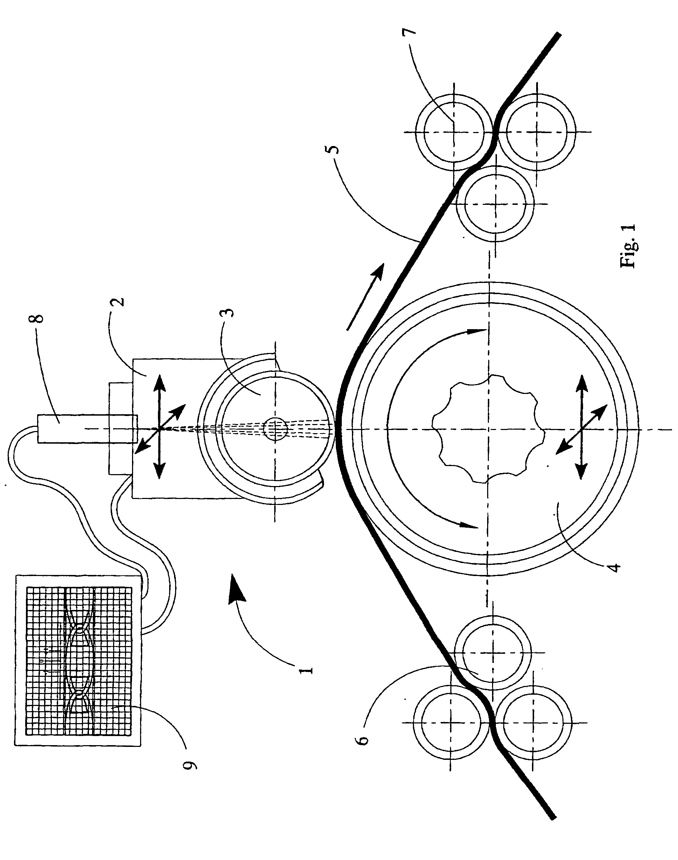

- Fig. 1 shows a schematic front view of a possible constructive example of an incising diamond machine on which a detecting system according to the present invention operates;
- Fig. 2 is a schematic view of a possible monitor detection of the piece machined; and
- Fig. 3 is a schematic view of a processing phase of the sample image in which a scale tracing is defined with the consequent correction of the errors.

With reference to the accompanying drawings, number 1 denotes, as a whole, a diamond machine such as the machines that process concatenated chain links of any type and shape.

The present diamond machine includes a head 2 that supports a working unit 3.

The working unit 3 is equipped with diamond-incising tools showing horizontal and vertical axes.

In case, the diamond-incising tools can be provided with a device for changing the tools and a lower vice 4.

A continuous chain 5 is fed between tension rollers 6 and 7 and runs onto the vice.

For the purposes of the present invention it is preferable to utilize a vice 4 equipped with a feeding system actuated by a step by step motor or an electronic control motor. The vice can move forward or backward indifferently in order to exactly adjust the position of the chain links. In addition, it is better that the tension rollers 6 and 7 be provided with a forward and backward recovery device.

The recovery device is the object of an earlier patent filed by the same applicant.

The peculiarity of the invention is the presence of a control device including a digital detecting telecamera 8 placed in the upper part of the head and preferably on the vertical of the cutting point of the tools, and a monitor 9 equipped with instruments for the control, detection and process of sample images and the instantaneous control of the link feeding onto the vice.

The so-obtained system is able to produce monitor images representing shape and dimensions of the links to be worked. These images form the base on which the operative parameters are set up. In practice, these parameters define the displacement of vice and tools with a centesimal or even millesimal precision.

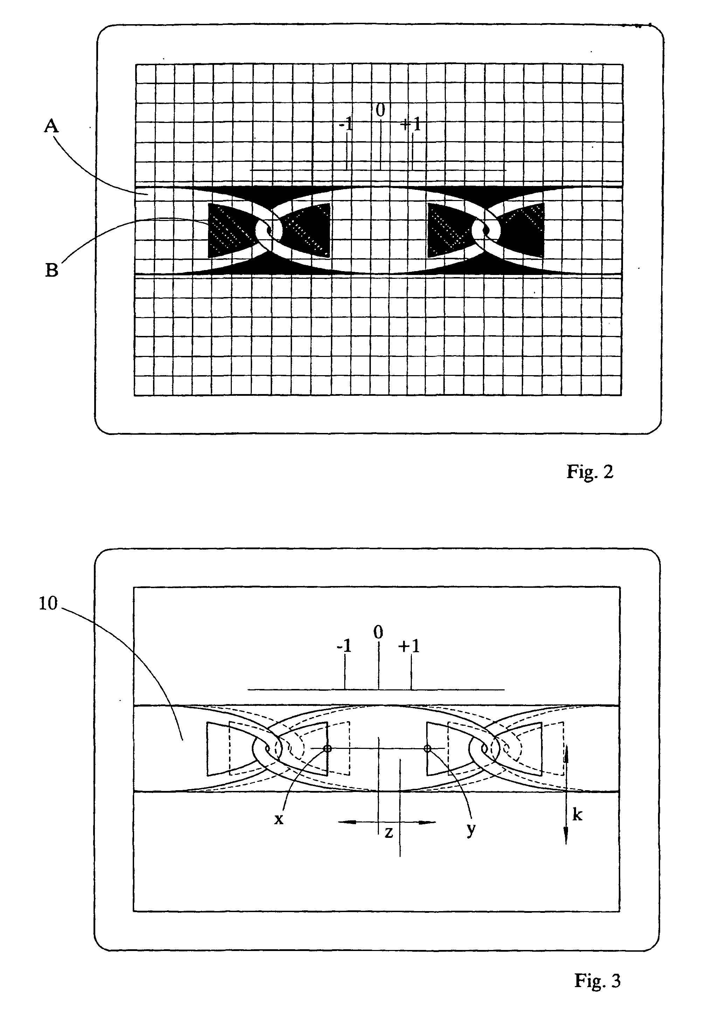

As shown in Figure 3, image 10 is detected and represented in the monitor. This image represents the outline of the links to be processed while they are clamped by the vice under the tools. The image shows light zones "A" and dark zones "B", the former being full link zones and the latter being empty link zones.

The first phase of the detecting system consists in identifying shape and dimensions of the link or standard element through a scale tracing. The so-called scale tracing is effected by displacing the vice in order to bring the link to the centre of the monitor. Then, the operator traces the main co-ordinates of the piece to be machined by utilizing suitable tracking instruments such as a mouse or the like. These co-ordinates are the co-ordinates "X" and "Y" that are calculated in the border line between the light zones "A" and the dark zones "B" of the chain link.

At this stage, an image is processed by utilizing software so that the system knows the sample image. This image usually has a barycentre and borders where the tools work to decorate the piece. The sample image can determine with precision the position the clamped link must take up under the tools.

When owing to the rotary movement of the vice the link or piece arrives under the tools, the link stops in an approximate position and is immediately "photographed" by a telecamera that detects the actual position of the link.

In case a chain link or piece to be worked takes up an incorrect position, even of only a few millimeter-hundreths, the system calculates with precision both the transversal entity "z" and the longitudinal entity "k" of the off-centre position (along the vice axis) and turns, with the highest precision, the detected measures into an instantaneous forward or backward rotary displacement of the vice so that the link or piece is brought to its proper barycentre position where it can be correctly worked by the incising diamond tools.

Oviously, all the aforesaid phases are instantaneous and almost imperceptible, even if one watches carefully, but the working precision is excellent.

The so-described detecting system allows to perform different operations such as incisions or points by utilizing tools with horizontal and vertical axes as well as all the known working systems with automatic control.

Advantageously, the so-described detecting system can be utilized on diamond machines to work other jewels apart chains, for instance rings, medals, spherical or oval or cylindrical objects, wedding rings and so on, the positioning and working of the piece being automatic.

Another advantage consists in taking advantage of a data bank containing several versions of the sample image. The data bank can be installed in the processing system. In this way, there is not the necessity of detecting piece shape and dimensions each time.

In addition, there is the possibility of controlling the error edges for which the correction processes must intervene by fixing the wished error degrees each time.

A technician of this field can develop and effect changes and variants in the so-described, represented diamond machine, provided with an electronic detecting system according to the present invention, and obtain solutions that are to be considered as included in the scope of protection of the present invention with its specific features as defined in the following claims.

## Claims

1. Diamond machine (1), equipped with an electronic detecting system to detect the shape of the pieces (2) to be diamond-incised, wherein the said detecting system is based on the utilization of at least a telecamera (8); positioned near the vertical of the piece to be worked, which piece is fed to a vice (4); and images (10) of the piece are obtained and transmitted to a monitor (9) **characterized by** the fact that the diamond machine (1) comprises a working unit (3) equipped with tools showing horizontal and vertical axes and provided with a device for changing the tools, and by the fact that the vice (4) is equipped with a continuous feeding system and the monitor (9) includes means to set up and process working parameters detecting dark zones and light zone from the images, being the processed working parameters then transformed in signals to move the vice that holds the piece so that the vice is able to instantaneously and micrometrically displace each ring or link or piece to be worked and to exactly adjust the barycentre of the piece under the incising diamond tools (3) of the head (2); being the monitor means suited to control the error limits for which the correction processes must intervene on fixing and setting up the wished error degrees each time.

2. Diamond machine (1), equipped with an electronic detecting system as claimed in the foregoing claim, **characterized by** the presence of a control device including a digital detecting telecamera (8), placed in the upper part of the head (2) near the vertical of the incising point of the tools, and at least a monitor (9), provided with instruments and software for the control, detection and process of sample images (10) as well as the instantaneous control of the link feeding on the vice (4).

3. Diamond machine (1), equipped with an electronic detecting system as claimed in the foregoing claims, **characterized by** the fact that this system is able to produce monitor images (10) representing shape and dimensions of the links to be worked, which images form the base on which operative parameters are set up to define the displacement of vice (4) and tools (3) with a centesimal or even millesimal precision.

4. Diamond machine (1), equipped with an electronic detecting system as claimed in the foregoing claims, **characterized by** the fact that the first phase of the detecting system consists in identifying shape and dimensions of the link or sample element to be worked through a "scale tracing" which is effected by displacing the vice (4) in order to bring the link near the centre of the monitor (9), then, the operator traces the main co-ordinates of the piece to be machined by utilizing suitable pointing instruments such as a mouse, these co-ordinates being the co-ordinates "x" and "y" that are calculated in the edges between the light zones "A" and the dark zones "B" of the link to be worked.

5. Diamond machine (1), equipped with an electronic detecting system as claimed in the foregoing claims, **characterized by** the fact that the detection of the piece is effected by processing an image through software means so that the system knows the sample image, which usually has a barycentre and edges where the tools (3) work to decorate the piece and the sample image allows to exactly determine the position the clamped link must take up under the tools (3).

6. Diamond machine (1), equipped with an electronic detecting system as claimed in the foregoing claims, **characterized by** the fact that in case a chain link or similar piece to be worked takes up an incorrect position, even for only a few millimiter-hundredths, the system calculates exactly both the transversal entity "z" and the longitudinal entity "k" of the off-centre position and turns, with the highest precision, the detected measure into an instantaneous forward and backward rotary displacement of the vice (4) or in a longitudinal or axial displacement so that the link or piece can be brought to its proper barycentre position where it can be correctly worked by the incising diamond tools (3).

7. Diamond machine (1), equipped with an electronic detecting system as claimed in the foregoing claims, **characterized by** the fact that the detecting and controlling system can be suitably utilized also on diamond machines to work other jewels apart chain links, such as rings, medals, spherical or oval or cylindrical objects, wedding rings, bracelets and whatever objects to be detected, the positioning and working of the piece being automatic.

8. Diamond machine (1), equipped with an electronic detecting system as claimed in the foregoing claims, **characterized by** the fact that there is the possibility of utilizing a data bank containing several versions of the sample image that are installed in the processing system, in this way there being no necessity of detecting piece shape and dimensions each time.

## Patentansprüche

1. Abrichtmaschine mit einem elektronischen Erfassungssystem der Form der abzurichtenden Werkstücke (2), bei der das Erfassungssystem auf der Verwendung mindestens einer Fernsehkamera (8) oder Ähnlichem beruht. Die Fernsehkamera befindet sich in der Nähe der Vertikalen des Werkstücks, das auf einem Schraubstock (4) oder Ähnlichem vorgeschoben wird. Die erfassten Bilder (10) werden an einen Bildschirm (9) weitergeleitet. Die Abrichtmaschine (1) ist **dadurch gekennzeichnet, dass** sie eine Arbeitseinheit (3) mit Schneidwerkzeugen mit horizontaler und vertikaler Achse umfasst und mit einer Vorrichtung für den Werkzeugwechsel ausgestattet ist und dass der Schraubstock (4) über ein-Dauerzufuhrsystem verfügt und der Bildschirm (9) Vorrichtungen für die Einstellung und Verarbeitung der Parameter umfasst, die dunkle und helle Bereiche der Bilder erfassen. Die Betriebsparameter werden verarbeitet und dann in Bewegungssignale für den Schraubstock mit dem Werkstück umgewandelt, der in der Lage ist, den einzelnen Ring, das einzelne Glied oder das Werkstück umgehend mikrometrisch zu verschieben, wodurch der Schwerpunkt genau unter die Schneid- und Abrichtwerkzeuge des Kopfes zentriert wird. Die Vorrichtungen des Bildschirms überwachen die Fehlergrenzen, innerhalb derer die Korrekturmaßnahmen einzuleiten sind, und können von Mal zu Mal die gewollten Fehlergrade festlegen und einstellen.

2. Abrichtmaschine mit einem elektronischen Erfassungssystem nach dem vorangehenden Anspruch, **dadurch gekennzeichnet, dass** sie über eine Kontrollvorrichtung verfügt, zu der ein Erfassungsgerät mit Digitalkamera (8) oder Ähnliches, das sich oben am Kopf in der Nähe der Vertikalen des Einschnittpunkts der Werkzeuge befindet, und mindestens ein Bildschirm (9) mit Instrumenten und Software für die Kontrolle, die Erfassung und die Verarbeitung der Musterbilder sowie für die Sofortkontrolle des Vorschubs der einzelnen Glieder oder Werkstücke auf dem Schraubstock gehören.

3. Abrichtmaschine mit einem elektronischen Erfassungssystem nach den vorangehenden Ansprüchen **dadurch gekennzeichnet, dass** dieses System die Form und Maße der zu bearbeitenden Glieder auf dem Bildschirm bildlich darstellt. Diese Bilder bilden die Grundlage für die Einstellung der Betriebsparameter, d.h. die Parameter für die Verschiebung des Schraubstocks und der Werkzeuge mit Hundertstel- oder Tausendstelpräzision.

4. Abrichtmaschine mit einem elektronischen Erfassungssystem nach den vorangehenden Ansprüchen **dadurch gekennzeichnet, dass** in der ersten Phase des Erfassungssystems mit einem "Lineal" Form und Maße des Probestücks oder des Werkstücks erfasst werden. Für diesen Vorgang wird das Glied (durch Verschieben des Schraubstocks) etwa in die Bildschirmmitte gebracht. Dann werden mit entsprechenden Eingabegeräten - Mouse oder Ähnliches - die wichtigsten Koordinaten des Werkstücks gezeichnet, ausgehend von den "x"- und "y"-Koordinaten, die in den Grenzzonen zwischen hellen und dunklen Bereichen des Werkstücks berechnet werden.

5. Abrichtmaschine mit einem elektronischen Erfassungssystem nach den vorangehenden Ansprüchen, **dadurch gekennzeichnet, dass** zur Erfassung des Werkstücks das Bild per Software verarbeitet wird. Dem System liegt ein Musterbild vor, das normalerweise über einen Schwerpunkt und Grenzzonen, innerhalb derer die Werkzeuge für die Verzierung des Werkstücks arbeiten können, verfügt. Die Maschine ist in der Lage, genau die Position festzulegen, die jedes in den Schraubstock unter den Werkzeugen eingespannte Element einnehmen muss.

6. Abrichtmaschine mit einem elektronischen Erfassungssystem nach den vorangehenden Ansprüchen, **dadurch gekennzeichnet, dass**, wenn ein Kettenglied oder Ähnliches in nicht korrekter Arbeitsposition unter das Werkzeug kommt - und sei es auch nur eine Abweichung um wenige Hundertstel -, das System exakt das Ausmaß "z" und "k" (Quer- und Längswert) der Abweichung von der Mitte berechnet und den erfassten Wert mit höchster Präzision in eine umgehende Verschiebung des Schraubstocks umwandelt. Durch Vor- oder Zurückdrehung bzw. Verschiebung in Längs- oder Axialrichtung bringt der Schraubstock das Werkstück in seine geeignetere Schwerpunktposition zurück, um von den Abrichtwerkzeugen korrekt bearbeitet zu werden.

7. Abrichtmaschine mit einem elektronischen Erfassungssystem nach den vorangehenden Ansprüchen, **dadurch gekennzeichnet, dass** dieses Erfassungs- und Kontrollsystem auch an Abrichtmaschinen für die Bearbeitung von anderem Schmuck als Kettengliedern, wie beispielsweise Ringen, Medaillen, runden, ovalen und zylindrischen Objekten, Eheringen, Armreifen und anderen abzumessenden Schmuckstücken, eingesetzt werden kann, um Positionierung und Bearbeitung zu automatisieren.

8. Abrichtmaschine mit einem elektronischen Erfassungssystem nach den vorangehenden Ansprüchen, **dadurch gekennzeichnet, dass** sie über die Möglichkeit verfügt, auf eine Datenbank mit den verschiedenen Modellen der Musterbilder, die im Verarbeitungssystem installiert werden können, zurückzugreifen. Auf diese Art und Weise entfällt die Notwendigkeit, Form und Maße des Werkstücks jedes Mal neu zu erfassen.

## Revendications

1. Machine-outil avec outil en diamant douée d'un système de détection électronique de la conformation des pièces (2) à diamanter, où ce système de détection se fonde sur l'emploi de au moins une télécaméra (8) ou similare, située essentiellent en proximité de la verticale de la pièce à travailler, située en avancement sur un étau (4) ou similaire, obtenant des images (10) qui viennent transmises à un moniteur (9), **caracterisée par le fait que** la machine-outil avec outil en diamant (1) comprend une unité de travail (3) pourvue de outils incisifs à axe horizontal et vertical et douée de dispositif d'échange des outils, et **par le fait que** l'étau (4) est pourvu d'une système à alimentation continue et le moniteur (9) comprend des moyens pour l'établissement et l'élaboration des paramètres rélévants zones sombres et zones clairs des images et étant les paramètres de travail élaborés et après transformés en signaux de mouvementation pour l'étau porte pièce, qui sera en mésure de déplacer instantanément et en manière micrométrique chaque boucle, ou chaque maille ou la pièce en usinage, en règularisant exactament le barycentre sous les outils de gravure et de diamantage de la culasse; étant les dispositifs du moniteur susceptibles à contrôler les zones les marges d'erreurs entre lesquelles faire intervenir les procès de correction, en pouvant établir et organiser, chaque fois, les degrés d'erreur voulus.

2. Machine-outil avec outil en diamant douée d'un système de détection électronique selon la revendication précédente, **caracterisée par** la présence d'un dispositif de contrôle dont font partie un révélateur à télécaméra digitale (8) ou similaire, située dans la partie supérieure de la tête en proximité de la verticale du point de gravure des outils, et au moins un moniteur (9) doué d'instruments et du software pour le contrôle, la détection et le traitement des images échantillon, ainsi que pour le contrôle instantané de l'avance de toutes les mailles ou pièces en avance sur l'étau.

3. Machine-outil avec outil en diamant douée d'un système de détection électronique selon les revendications précédentes, **caracterisée par le fait que** ce systeme est en mésure de produire des images à moniteur relatives à la forme et aux dimesions des mailles à parer, dont les images sont le fondement où poser les paramètres operatifs, c'est à dire les paramètres pour le déplacement de l'étau et des outils avec une précision centésimale ou millésimale.

4. Machine-outil avec outil en diamant douée d'un systéme de détection électronique selon les revendications précedentes, **caractérisée par le fait que** la premiére phase du système de détection prevoit l'identification de la forme et des dimensions de l'élement échantillon ou de la pièce en usinage, ou moyen d'un « traçage règle », pour effectuer lequel on porte la maille (en déplaçant l'étau) en proximité de la partie centrale du moniteur et ensuite, avec des spéciaux instruments de pointage du genre à « mouse » ou similaire, on tire des coordonnées jugées les plus significatives pour la pièce, à partir de des coordonnées « x » et « y » calculées dans les zones de limite entre les superficies claires et les superficies sombres de l'élément à parer.

5. Machine-outil avec outil en diamant douée d'un système de détection électronique selon les revendications précédentes, **caracterisée par le fait que** pour la détection de la pièce vient effectuée une élaboration de l'image par software, raison pour laquelle le système est à connaissance de l'image échantillon, qui est normalement douée d'un barycentre et de zones de limite dans lesquelles les outils peuvent travailler pour la decoration de la pièce, et elle est en mésure de établir exactement la position qui doit tenir chaque élément, fermé par l'étau, au dessous des outils.

6. Machine-outil avec outil en diamant douée d'un système de détection électronique selon les revendications précédentes, **caracterisée par le fait que**, dans le cas où un élément de la chaîne ou similaires parvienne sous l'outil dans une position de travail pas correcte, même de peu de centièmes, le système calcule exactement l'étendue « z » et « k » (transversale et longitudinale) du décentrement et transforme, avec extrême précision, la mésure rélévée dans un déplacement immédiat de l'étau qui tournera en avant ou en arrière et/ou se déplacera en direction longitudinale ou axiale, en remettant la pièce dans sa position plus appropriée de barycentre, pour être correctement travaillé par les outils de diamantage.

7. Machine-outil avec outil en diamant douée d'un système de détection électronique selon les revendications précédentes, **caracterisée par le fait que** ce système de détection et de contrôle peut être convenablement utilisé même sur des machines-outils avec outil en diamant pour l'usinage de bijoux différents des mailles d'une chaîne comme par example pour bagues, medailles, objets sphériques, ovales et cylindiques, alliances, bracelets ou d'autres choses qu'on croit utile relever, en automatisant le positionnement et l'usinage.

8. Machine-outil avec outil en diamant douée d'un système de détection électronique selon les revendications précédentes, **caracterisées par** la possibilité d'utiliser une banque d'information de différentes modèles des images échantillon, qui peuvent être installées dans le systeme d'élaboration, en évitant ainsi la nécessité de relever chaque fois la forme et les dimensions de la pièce.
